# EUROPÄISCHE PATENTSCHRIFT

(11) **EP 4 068 199 B1**
(45) Veröffentlichungstag und Bekanntmachung des Hinweises auf die Patenterteilung: **23.09.2026**
(21) Anmeldenummer: 22164815.7
(22) Anmeldetag: 28.03.2022
(51) Int. Cl.: G06T 7/521, G06T 7/11, G06T 7/174, G06T 7/194

(54) **VERFAHREN UND VORRICHTUNG ZUR ERZEUGUNG EINES BRILLENLOSEN DREIDIMENSIONALEN MODELLS DES KOPFES EINER BEBRILLTEN PERSON**
METHOD AND DEVICE FOR CREATING A SPECTACLE-LESS THREE-DIMENSIONAL MODEL OF THE HEAD OF A BESPECTACLED PERSON
PROCÉDÉ ET APPAREIL DE GÉNÉRATION D'UN MODÈLE TRIDIMENSIONNEL SANS LUNETTES DE LA TÊTE D'UNE PERSONNE PORTANT DES LUNETTES

(30) Priorität: 31.03.2021 DE 102021108142
(43) Veröffentlichungstag der Anmeldung: 05.10.2022
(73) Patentinhaber: Bundesdruckerei GmbH, 10969 Berlin (DE)
(72) Erfinder: WOLF Andreas, 13158 Berlin (DE); GRIESER Ralf, 10589 Berlin (DE); PETERS Florian, 10437 Berlin (DE); TSCHORN Stefan, 16775 Gransee (DE)
(74) Vertreter: Hentrich Patent- & Rechtsanwaltspartnerschaft mbB

(56) Entgegenhaltungen:
- EP-A1- 1 501 046
- EP-A1- 3 454 253
- WO-A1-2016/111327
- WO-A1-2017/030821
- CN-A- 102 253 590
- CN-B- 105 184 253
- JP-A- 2008 232 776
- US-A1- 2002 136 435
- US-A1- 2017 344 807
- US-A1- 2019 340 732
- US-B1- 9 202 105
- FABIO MANINCHEDDA ET AL: "Fast 3D Reconstruction of Faces with Glasses", IEEE CONFERENCE ON COMPUTER VISION AND PATTERN RECOGNITION (CVPR 2017), 1 July 2017 (2017-07-01), pages 4608 - 4617, XP055549648, ISBN: 978-1-5386-0457-1, DOI: 10.1109/CVPR.2017.490
- PROESMANS M ET AL: "Active acquisition of 3D shape for moving objects", PROCEEDINGS OF THE INTERNATIONAL CONFERENCE ON IMAGE PROCESSING (ICIP) LAUSANNE, SEPT. 16 - 19, 1996; [PROCEEDINGS OF THE INTERNATIONAL CONFERENCE ON IMAGE PROCESSING (ICIP)], NEW YORK, IEEE, US, vol. 3, 16 September 1996 (1996-09-16), pages 647 - 650, XP010202477, ISBN: 978-0-7803-3259-1, DOI: 10.1109/ICIP.1996.560578
- WONG W K ET AL: "Eyeglasses removal of thermal image based on visible information", INFORMATION FUSION, ELSEVIER, US, vol. 14, no. 2, 22 September 2011 (2011-09-22), pages 163 - 176, XP028975519, ISSN: 1566-2535, DOI: 10.1016/J.INFFUS.2011.09.002

## Beschreibung

Die Erfindung betrifft ein Verfahren zur Erzeugung eines brillenlosen dreidimensionalen Modells eines Kopfes einer bebrillten Person und eine entsprechende Vorrichtung.

Bilder, insbesondere Passbilder sollten eine möglichst eindeutige Identifizierung der abgebildeten Person ermöglichen. Das Tragen von Brillen kann eine solche Identifizierung erschweren, insbesondere wenn sie automatisiert erfolgt. Brillen, vor allem Brillen mit auffälligen Brillengestellen, können den Eindruck eines Gesichts verändern und auch biometrische Merkmale, wie beispielsweise den Augenabstand, können wegen der optischen Effekte der Brillengläser verzerrt bzw. verändert erscheinen. Somit beeinträchtigen Brillen die Leistung von biometrischen Gesichtserkennungssystemen.

Eine Möglichkeit, die Identifizierung zu verbessern, liegt in der Aufforderung, die Brille während der Erstellung des Gesichtsbildes bzw. des Passbildes abzunehmen. Dies ist allerdings insbesondere für stark fehlsichtige Menschen, nicht nur unangenehm, sondern kann dazu führen, dass diese Menschen die Augen stark zu kneifen, um Anweisungen an einem Terminal oder an einem Bedienfeld lesen zu können. Dies wirkt einem gewünschten neutralen Blick der Person beim Identifizierungsvorgang oder beim Bilderstellungsvorgang entgegen. Um die Sicherheit zu erhöhen und das Identifizierungsverfahren noch eindeutiger gestalten zu können, wäre es vorteilhaft, die Gesichtserkennung nicht nur anhand von zweidimensionalen Modellen als Referenzdaten, sondern anhand von dreidimensionalen Modellen als Referenzdaten erfolgen zu lassen.

Die DE 10 2017 119 625 A1 verweist auf die Möglichkeit, das bebrillte Gesicht mit einer Struktur zu beleuchten, um die sich aufgrund der Brillengläser ergebenen Verzeichnungen zu ermitteln. Anschließend wird die Verzeichnung aus der Aufnahme herausgerechnet, sodass ein brillenloses Gesichtsbild entsteht. Die darin beschriebene Vorrichtung und das darin beschriebene Verfahren haben sich gut für die Erkennung biometrischer Merkmale bei Brillenträgern bewährt.

Die JP 2008 232 776A offenbart ein Verfahren und eine Vorrichtung zum Erzeugen eines 3D Modells eines Kopfes einer Person, wobei ein 3D-Rohmodell mittels strukturierter Beleuchtung erzeugt wird.

Die WO 2017 / 030 821 A1 lehrt die dreidimensionale Modellierung einer Person, die einen Erfassungsbereich eines Zugangsgates passiert.

*"*Fast 3 D Reconstruction of faces with Glasses", IEEE Conference on Computer Vision and Pattern Recognition 2017, S. 4608-4617 F. Manincheda et al. offenbart ein Verfahren mittels dessen Brillengläser und Brillengestelle erkannt und aus einem Höhenmodell entfernt werden.

Die US 2002/0136435 A1 offenbart das Erkennen von Brillengläsern und Brillengestellen in 2D Bildern und in Infrarotbildern.

Die EP 3 454 253 A1 zeigt das Erkennen und Entfernen von Gestellpixeln in einem 2D-Modell.

Die US 2017/0344807 A1 offenbart eine Vorrichtung und ein Verfahren zur Gesichtserkennung und zum Entfernen von Brillengläsern aus einem 3D Modell, ohne die Verzeichnung zu korrigieren.

Die US 2019 / 0340732A1 beschreibt die Erkennung der Pupillen und der Gesichtskontur eines Nutzers, wobei anschließend ein mathematisches Modell diverser Linsen herangezogen wird, um "virtuell" ein Brillengestell mit Linse aufzusetzen.

Wong et al., Proceedings of the International Conference on Image Processing 1996, Lausanne, Schweiz, vol. 3, Seiten 647 - 650 lehrt die Nutzung einer Fusion von Gesichtsbildern im sichtbaren Wellenlängenbereich und im IR-Bereich, um eine Brillenextraktion vorzunehmen.

Die CN 105 184 253 B offenbart ein Trainingsverfahren für die Gesichtserkennung, um Menschen anhand von Bildern zu erkennen, wenn sie eine Brille tragen, gegenüber wenn sie keine Brille tragen, oder wenn sich das getragene Brillenmodell ändert. Das Training erfolgt dabei anhand von 2D Bildes der gleichen Person mit und ohne Brille.

Der Erfindung liegt die Aufgabe zugrunde, ein vereinfachtes Verfahren und eine vereinfachte Vorrichtung zur Erzeugung eines brillenlosen dreidimensionalen Modells von einer bebrillten Person bereitzustellen.

Diese Aufgabe wird durch ein Verfahren mit den Merkmalen des Anspruchs 1 und durch eine Vorrichtung mit den Merkmalen des Anspruchs 9 gelöst. Vorteilhafte Ausgestaltungen mit zweckmäßigen Weiterbildungen der Erfindung sind in den abhängigen Ansprüchen angegeben.

Das erfindungsgemäße Verfahren zur Erzeugung eines brillenlosen dreidimensionalen Modells eines Kopfes einer bebrillten Person umfasst die folgenden Schritte:
- Erzeugung eines dreidimensionalen Rohmodells des Kopfes der Person mit Brille anhand mindestens eines mit einer Kamera erfassten ersten Bildes des Kopfes der Person,
- Identifizierung der einem Brillengestell zugeordneten Gestellpixel (Gestellvoxel) und der den Brillengläsern zugeordneten Brillenglaspixel (Brillenglasvoxel) in dem Rohmodell,
- bei Vorhandensein von Gestellpixel (Gestellvoxel), entfernen dieser aus dem Rohmodell,
- Identifizierung von Pixel eines Verlaufs wenigstens eines Gesichtszugs der bebrillten Person abseits der Gestellpixel (Gestellvoxel) und abseits der Brillenglaspixel (Brillenglasvoxel),
- Erfassen derjenigen Pixel im Verlauf des Gesichtszugs, die einer durch das Brillenglas hervorgerufenen Verzeichnung des Gesichtszugs entsprechen,
- Ableiten oder Anwenden einer Regel aus dem Verlauf der verzeichneten Pixel (Voxel) und
- Versetzen aller Brillenglaspixel (Brillenglasvoxel) in dem Rohmodell entsprechend der ermittelten oder angewendeten Regel, derart, dass ein brillenloses dreidimensionales Modell erzeugt wird, bei dem die durch die Brillengläser hervorgerufenen optischen Effekte ausgeglichen sind.

Damit ist der Vorteil verbunden, dass anhand eines dreidimensionalen Rohmodells zuverlässig ein brillenloses dreidimensionales Modell zur Identifizierung eines Kopfes einer bebrillten Person erstellt werden kann, ohne dass die Person die Brille abnehmen muss. Dabei wird die Brille der Person, also insbesondere das Brillengestell und die Brillengläser und damit auch die durch die Brillengläser hervorgerufenen optischen Effekte weitestgehend beseitigt, indem durch das Ableiten oder Anwenden einer Regel aus dem Verlauf der verzeichneten Pixel und alle Brillenglaspixel entsprechend der Regel in dem Rohmodell versetzt werden.

Dies ermöglicht eine zuverlässige Erfassung des Augenbereichs, insbesondere der periokularen Region, also der Region der Augen ohne die Iriden, der bebrillten Person. Indem der Person ermöglicht wird, die Brille auch während des Aufnahmeprozesses zu tragen, kann ein nahezu eindeutiges dreidimensionales Modell des Kopfes und damit erfindungsgemäß auch der periokularen Region erzeugt werden, sodass eine verbesserte gegebenenfalls automatische Identifizierung der Person gegeben ist. Die Gestellpixel und der Brillenglaspixel werden in dem dreidimensionalen Rohmodell identifiziert. Die Gestellpixel und die Brillenglaspixel sind folglich Datenpunkte in einem dreidimensionalen Gitter, also Gestellvoxel und Brillenglasvoxel.

Unter einem brillenlosen dreidimensionalen Modell wird sowohl die Erzeugung eines dreidimensionalen Modells des gesamten Kopfes, insbesondere des gesamten Gesichtes verstanden, als auch die Erzeugung eines dreidimensionalen Modells ausschließlich einer Teilregion innerhalb des Gesichts, nämlich der periokularen Region. Durch die Erzeugung eines dreidimensionalen Rohmodells mit Brille ausschließlich der periokularen Region des daraus resultierenden brillenlosen dreidimensionalen Modells der periokularen Region wird der Rechenaufwand erheblich reduziert. Die Kamera erfasst erfindungsgemäß ausschließlich die periokulare Region. In diesem Zusammenhang ist es im Zuge der Datensparsamkeit und einer vereinfachten Verarbeitung der erfassten Datenmenge- anstelle der Aufzeichnung des gesamten Gesichts der Person - von Vorteil, wenn von der Kamera ausschließlich der Bereich erfasst wird, der durch fiktive Verbindungsgeraden zwischen den Merkmalspunkten 5.3 und 5.4 sowie 4.3 und 4.4 nach ISO/IEC 14496-2 (Stand: 1999) begrenzt und vorgegeben ist.

Weiterhin wird darauf hingewiesen, dass die beschriebene Reihenfolge der Schritte nicht zwingend ist. So ist es auch möglich, zuerst die optischen Effekte der Brillengläser auszugleichen und erst im Anschluss die Gestellpixel (Gestellvoxel) zu entfernen. Die Gestellpixel und die Brillenglaspixel (Brillenglasvoxel) können auch unabhängig voneinander identifiziert und zugeordnet werden.

Die durch die Brillengläser hervorgerufenen optischen Effekte umfassen dabei Abbildungsfehler, die Brechung des Lichts am Rand der Brillengläser, sowie diejenigen Abbildungseffekte, die durch konvexe und/oder konkave Linsenform hervorgerufen werden; im Allgemeinen spricht man hier von einer sogenannten "Verzeichnung", welche ihrerseits die Regel für eine Pixelversetzung/Voxelversetzung vorgibt. Die Verzeichnung des Verlaufs des Gesichtszugs kann anhand von Unstetigkeitsstellen und/oder Knickstellen des Verlaufs ermittelt werden. Folglich wird mindestens ein Gesichtszug identifiziert, dessen Verlauf zum Teil innerhalb des Brillenglases, also innerhalb der dem Brillenglas zugeordneten Brillenglaspixel/Brillenglasvoxel verläuft und zum anderen Teil außerhalb der der Brille zugeordneten Brillenglaspixel/Brillenglasvoxel und der Gestellpixel/Gestellvoxel, sowie die Regel anhand der detektierten Unstetigkeitsstellen und/oder Knickstellen dieses Verlaufs ermittelt/abgeleitet. Die Pixel/Voxel des Verlaufs des Gesichtszugs außerhalb der Brille (also abseits der Gestellpixel/Gestellvoxel und Brillenglaspixel/Brillenglasvoxel) werden folglich denjenigen Brillenglaspixel/Brillenglasvoxel des Verlaufs des Gesichtszugs zugeordnet, die innerhalb des Brillenglases angeordnet sind.

Um präzise Daten für Aufstellung einer Regel für das "Herausrechnen" der Brille bereitzustellen, hat es sich ferner als vorteilhaft erwiesen, wenn mehr als ein Gesichtszug identifiziert wird, und wenn für die mehreren Gesichtszüge eine Verzeichnung des Verlaufs erfasst wird.

Die Erkennung der Gestellpixel (Gestellvoxel) erfolgt vorzugsweise, indem ein dreidimensionales Modell angewandt wird, welches die üblichen Teile einer Brille, sprich das Brillengestell bestehend aus den Bügeln und dem Nasensattel sowie der Brillengläser, erwartet und die Gestellpixel (Gestellvoxel) sowie die Brillenglaspixel (Brillenglasvoxel) entsprechend zuordnet. Alternativ können die Gestellpixel (Gestellvoxel) auch durch eine Farberkennung, eine Randerkennung oder eine Kontrasterkennung identifiziert werden.

Insbesondere ist es von Vorteil, wenn die durch das Entfernen der Gestellpixel (Gestellvoxel) im Rohmodell erzeugten Fehlpixel (Fehlvoxel) mittels Extrapolation der zu den Gestellpixel (Gestellvoxel) benachbarten Pixel (benachbarten Voxel) ausgeglichen werden. Alternativ ist es möglich, dass die durch das Entfernen der Gestellpixel (Gestellvoxel) im Rohmodell erzeugten Fehlpixel (Fehlvoxel) anhand von weiterer Bildinformation ausgeglichen werden, die weiteren Bildern des Kopfes der Person, die aus unterschiedlichen Neigungswinkeln optisch erfasst wurden, entnommen werden.

Zur Erzeugung des dreidimensionalen Rohmodells umfasst das Verfahren vorzugsweise die folgenden Schritte:
A) Optisches Erfassen eines ersten Bildes aus einer ersten Richtung des Kopfes der Person mittels der Kamera, wodurch ein erster Datensatz erzeugt wird.
B) Optisches Erfassen wenigstens eines zweiten Bildes aus einer zweiten Richtung des Kopfes durch die Kamera oder durch eine weitere Kamera, wodurch ein zweiter Datensatz erzeugt wird, und
C) Zusammenführen der Bilder oder der Datensätze zu einem dreidimensionalen Rohmodell mit Brille.

Dies ermöglicht die Erstellung eines dreidimensionalen Rohmodells anhand des Zusammenführens mehrerer Bilder aus mehreren Richtungen des Kopfes. Dabei ist die Verwendung einer einzigen Kamera ausreichend, wenn sich die Ausrichtung des Kopfes bezüglich der Kamera zwischen den einzelnen Bildern unterscheidet. Alternativ kann aber auch ein Mehrkamerasystem verwendet werden, dessen Kameras den Kopf der Person aus unterschiedlichen Richtungen optisch erfasst.

Alternativ ist es auch möglich, das dreidimensionale Rohmodell mittels strukturierter Beleuchtung, auch genannt Streifenprojektion, zu erzeugen. Das Verfahren erfasst in diesem Fall vorzugsweise die folgenden Schritte:
A) Beleuchten eines Kopfes der Person und dadurch erzeugen eines Musters auf dem Gesicht der Person mittels eines Projektionsmittels,
B) Aufnahme eines Bildes des beleuchteten Kopfes der Person mit der Kamera, und
C) Berechnen des Rohmodells mit Brille anhand des Bildes.

Die Tiefeninformation zur Erzeugung eines dreidimensionalen Rohmodells mit Brille erfolgt hier anhand einer strukturierten Beleuchtung bzw. einer Streifenprojektion oder Punktprojektion. Weiterhin ist es in diesem Zusammenhang von Vorteil, wenn zunächst ein Bild des Kopfes der Person ohne das projizierte Muster erzeugt wird. Alternativ könnte ein dreidimensionales Rohmodell auch durch Laserscanning-Verfahren erzeugt werden.

Weiterhin ist es zur Anwendung des Verfahrens im Rahmen einer Zugangskontrolle bevorzugt, wenn der Auswerteeinheit ein Referenz-3D-Modell bereitgestellt wird, und wenn das brillenlose dreidimensionale Modell mit dem Referenz-3D-Modell verglichen wird, und wenn bei Übereinstimmung des brillenlosen dreidimensionalen Modells mit dem Referenz-3D-Modell der Zutritt bei einer Zugangskontrolle gewährt wird, während bei Abweichungen des brillenlosen dreidimensionalen Modells mit dem Referenz-3D-Modell der Zutritt bei einer Zugangskontrolle verweigert wird. In diesem Zusammenhang ist es bevorzugt, wenn das Referenz-3D-Modell auf einem Identitätsdokument angebracht ist, und dass das mit dem Referenz-3D-Modell versehene Identitätsdokument mit einem Lesegerät eingelesen wird, bevor es mit dem dreidimensionalen brillenlosen Modell verglichen wird.

Im Rahmen des Verfahrens zur Erstellung eines qualitativ hochwertigen und vollständigen dreidimensionalen Modells ist es bevorzugt, wenn nach einer ersten Erzeugung eines brillenlosen dreidimensionalen Modells dieses dahingehend überprüft wird, ob in dem ersten brillenlosen dreidimensionalen Modell Pixel, also Voxel, zur vollständigen Wiedergabe, insbesondere der periokularen Region, fehlen, und wenn der Kopf der Person oder zumindest die periokulare Region wenigstens einmal erneut unter einem anderen Winkel als beim ersten Erfassen erfasst wird, damit eine Vervollständigung des brillenlosen dreidimensionalen Modells und insbesondere der periokularen Region erfolgen kann.

Weiterhin ist es bevorzugt, wenn die durch die Kamera erfassten Bilder und/oder das brillenlose dreidimensionale Modell auf Falschpixel - also Falschvoxel - oder doppelt vorhandene Pixel - also doppelt vorhandene Voxel - überprüft werden, und dass bei Vorhandensein von Falschpixeln - Falschvoxeln - oder doppelt vorhandenen Pixeln/Voxeln diese korrigiert oder entfernt werden. Falschpixel - also Falschvoxel - sind Pixel/Voxel, die als fehlende Bildinformation entstehen nach der Kompensation der durch die Brillengläser bzw. Krümmung der Linsen auftretenden optischen Effekte. In Abhängigkeit der Linsenkrümmung der Brillengläser können manche Bereiche der periokularen Region auch doppelt auftreten, sodass sich doppelt vorhandene Pixel/Voxel eliminieren bzw. korrigieren lassen.

Um möglichst viele und vollständige Bildinformationen bei der Erfassung des Kopfes der Person zu erhalten, hat es sich ferner als vorteilhaft erwiesen, wenn der Person bei der Aufnahme der Bilder Anweisungen, beispielsweise mittels eines optischen oder akustischen Reizes, erteilt werden, den Kopf in unterschiedliche Richtungen zu neigen. Auf diese Weise lassen sich zumeist auch die hinter einem Brillengestell liegenden Bereiche der periokularen Region verbessert erfassen.

Im Rahmen der Identitätskontrolle im e-Pass System ist weiterhin die Erstellung eines 2D-Referenzbildes notwendig. In diesem Zusammenhang ist es bevorzugt, wenn im Rahmen des Verfahrens ein zweidimensionales bebrilltes Referenzbild aus dem brillenlosen dreidimensionalen Modell erzeugt und in einem Speicher hinterlegt wird.

Insbesondere ist es bevorzugt, wenn das zweidimensionale bebrillte Referenzbild mittels der folgenden Schritte erzeugt wird:
- Erzeugung eines zweidimensionalen brillenlosen Zwischenbildes mittels Projektion des brillenlosen dreidimensionalen Modells,
- erneutes optisches Erfassen des Kopfes der bebrillten Person, wodurch ein weiterer Datensatz und ein weiteres zweidimensionales Bild der bebrillten Person erzeugt wird, oder Bereitstellen eines der zuvor optisch erfassten zweidimensionalen Bilder des Kopfes der Person,
- Zuordnen, der Gestellpixel in dem Bild oder in dem weiteren Bild und Ausschneiden der Gestellpixel aus dem Bild oder aus dem weiteren Bild und
- Einfügen der Gestellpixel in das Zwischenbild und Ausgleichen der durch die Projektion und durch das Einfügen der Gestellpixel hervorgerufenen Verzerrungen, wodurch ein bebrilltes zweidimensionales Referenzbild des Gesichts der Person erzeugt wird, bei dem die durch die Brillengläser hervorgerufenen optischen Effekte ausgeglichen sind.

Hierdurch wird ein zweidimensionales Referenzbild des Gesichts der Person mit Brillengestell, aber ohne die durch die Brillengläser hervorgerufenen optischen Effekte erzeugt, sodass die periokulare Region unverzerrt, aber der generelle Eindruck der Person mit Brillengestell bestehen bleibt. Die Erzeugung des zweidimensionalen brillenlosen Zwischenbildes erfolgt dabei bevorzugt durch eine perspektivische Projektion mit einer virtuellen Entfernung von 50 cm bis 150 cm, besonders bevorzugt mit einer virtuellen Entfernung von 90 bis 110cm, ganz besonders bevorzugt mit einer virtuellen Entfernung von 100cm. Alternativ kann die virtuelle Entfernung auch bei Aufnahme jedes Bildes anhand der Entfernung des Kopfes bzw. des Gesichts von der Kamera bestimmt werden kann. Besonders bevorzugt erfolgt das Zuordnen der Gestellpixel anhand eines zuvor zur Erzeugung des dreidimensionalen Rohmodells erfassten Bildes des Kopfes der Person. Dies ermöglicht ein zeitlich schnell ablaufendes Verfahren.

Um die perspektivische Verzerrung der Projektion beim Übereinanderlegen des projizierten Zwischenbildes und der Gestellpixel auszugleichen, umfasst das Verfahren insbesondere die folgenden Schritte:
A) Lokalisation von Referenzpunkten in dem Bild oder in dem weiteren Bild, sowie Lokalisation der den Referenzpunkten entsprechenden Referenzpunkte in dem projizierten Zwischenbild,
B) Aufstellen einer Regel anhand der Verschiebung der Referenzpunkte in dem Bild oder in dem weiteren Bild bezüglich der Referenzpunkte in dem projizierten Zwischenbild, und
C) Verschieben der Gestellpixel in dem Zwischenbild anhand der weiteren Regel.

In anderen Worten werden die Positionen der Gestellpixel mit der im projizierten Zwischenbild zu erwartenden Position der Gestellpixel überprüft, solange bis diese Positionen übereinstimmen.

Die erfindungsgemäße Vorrichtung zur Erzeugung eines brillenlosen dreidimensionalen Modells einer bebrillten Person mit einer Kamera zur Erfassung eines Kopfes der Person, sowie mit einer mit der Kamera verbundenen Auswerteeinheit, die mittels des von der Kamera gelieferten Bildes ausgebildet ist,
- ein Rohmodell mit Brille einer Person anhand mindestens eines mit einer Kamera erfassten ersten Bildes des Kopfes der Person zu erzeugen,
- die einem Brillengestell zugeordneten Gestellpixel (Gestellvoxel) und der den Brillengläsern zugeordneten Brillenglaspixel (Brillenglasvoxel), in dem Rohmodell zu identifizieren,
- bei Vorhandensein von Gestellpixel (Gestellvoxel), diese aus dem Rohmodell zu entfernen,
- Pixel eines Verlaufs wenigstens eines Gesichtszugs der bebrillten Person abseits der Gestellpixel (Gestellvoxel) und der Brillenglaspixel (Brillenglasvoxel) zu identifizieren,
- diejenigen Pixel im Verlauf des Gesichtszugs, die einer durch das Brillenglas hervorgerufene Verzeichnung des Gesichtszugs entsprechend zu erfassen,
- eine Regel aus dem Verlauf der verzeichneten Pixel (Voxel) abzuleiten oder anzuwenden, und
- alle Brillenglaspixel (Brillenglasvoxel) in dem dreidimensionalen Rohmodell entsprechend der ermittelten oder angewendeten Regel zu versetzen, wodurch die durch die Brillengläser hervorgerufenen optischen Effekte ausgeglichen und ein brillenloses dreidimensionales Modell erzeugt wird.

Auf diese Weise wird ein brillenloses dreidimensionales Modell einer bebrillten Person erzeugt, bei der die Person die Brille auch bei der Aufnahme tragen kann. Diese Vorrichtung eignet sich in besonderem Maße für den Abgleich der Daten eines Identitätsdokuments, insbesondere eines Reisepasses. Zugleich lässt sich mit der Vorrichtung zuverlässig die Verzeichnung des durch die Brillengläser gebrochenen Lichts anhand der ermittelten Regel herausrechnen, sodass ein Benutzer die Brille für eine zuverlässige Identifizierung nicht abnehmen muss. Die Kamera dient der Erzeugung zumindest eines ersten Bildes des Kopfes der Person, wobei die Auswerteeinheit mit anderen Worten derart ausgestaltet ist, die Brille aus dem dreidimensionalen Rohmodell mithilfe einer Bildbearbeitungsanwendung zu entfernen. Für die Brillenerkennung und deren Herausrechnung werden optische Effekte berücksichtigt, wobei beispielsweise die Brechung am Glasrand des Brillenglases bzw. die Verzeichnung durch die Krümmung des Glases oder dergleichen erfasst und für die Erstellung des finalen dreidimensionalen brillenlosen Modells eliminiert werden. Die Auswerteeinheit selbst kann in Form eines Computers vorliegen und diverse Ein- und/oder Ausgabeeinheiten umfassen. Die Auswerteeinheit umfasst vorzugsweise einen eigenständigen Prozessor (beispielsweise einen Mikroprozessor) mit in dessen Speicher abgelegten und ausführbaren Echtzeitbetriebssystem (RTOS = Real-Time Operating System) und gegebenenfalls eine oder mehrere Anwendungen (Applications) zur Erzeugung eines brillenlosen oder brillengestelllosen dreidimensionalen Modells der periokularen Region der bebrillten Person. Die Kamera ist ausgebildet ausschließlich die periokulare Region optisch zu erfassen. Dies reduziert die zu verarbeitende Datenmenge erheblich.

Vorzugsweise ist die Auswerteeinheit ausgebildet, die Verzeichnung des Verlaufs des Gesichtszugs anhand einer Ermittlung von Unstetigkeitsstellen und/oder Knickstellen des Verlaufs zu ermitteln. Um präzise Daten für Aufstellung einer Regel für das "Herausrechnen" der Brille bereitzustellen, hat es sich ferner als vorteilhaft erwiesen, wenn mehr als ein Gesichtszug identifiziert wird, und wenn für die mehreren Gesichtszüge eine Verzeichnung des Verlaufs erfasst wird.

Die Vorrichtung kann dabei sowohl dem Erstellen eines brillenlosen dreidimensionalen Modells des Kopfes der Person zur Verwendung in einem Identitätsdokument (einem Referenz-3D-Modell), als auch der Erzeugung eines dreidimensionalen Modells zur Identifizierung und damit zum Abgleich mit einem Referenz-3D-Modell zum Beispiel an einem ABC-System/Terminal (Englisch "Automated Border Control") dienen. Insbesondere für den letztgenannten Fall ist es von Vorteil, wenn die Auswerteeinheit ausgebildet ist, das brillenlose dreidimensionale Modell der bebrillten Person mit einem Referenz-3D-Modell zu vergleichen.

Der Abgleich mit dem Referenz-3D-Modell eröffnet die Möglichkeit einer automatisierten Zugangskontrolle, insbesondere dann, wenn die Vorrichtung zusätzlich ein Lesegerät umfasst, das ausgebildet ist ein mit dem Referenz-3D-Modell versehenes Identitätsdokument einzulesen. Das eingelesene Referenz-3D-Modell kann dann für den Abgleich des von der Kamera erfassten, um die Brillengläser und das Brillengestell bereinigten dreidimensionalen Modells des Kopfes der Person genutzt werden.

Alternativ kann der Abgleich auch anhand eines zweidimensionalen bebrillten Referenzbilds mit ausgeglichenen optischen Effekten erfolgen. Dazu ist die Auswerteeinheit ausgebildet, ein bebrilltes zweidimensionales Referenzbild aus dem brillenlosen dreidimensionalen Modell mittels Projektion und mittels Einfügen von Gestellpixel aus dem ersten Bild oder einem durch die Kamera erfassten Bildes in das projizierte Zwischenbild zu erzeugen.

Zur Auflösungsverbesserung - und damit zur Erhöhung der Qualität des dreidimensionalen Modells - ist es ferner vorteilhaft, wenn mindestens eine weitere Kamera zur Aufnahme mindestens eines weiteren Bildes des Kopfes der Person vorhanden ist. Durch den Einsatz der weiteren Kamera ist es nun möglich, etwaig fehlende Bildinformationen zu ergänzen, die beim Entfernen des Brillengestells und/oder bei der Kompensation der optischen Effekte der Brillengläser entstanden sind. Mit den zusätzlichen Kameras werden mit anderen Worten zusätzliche Bildinformationen des Kopfes der Person aus unterschiedlichen Richtungen gesammelt. In diesem Zusammenhang ist es vorteilhaft, wenn die weitere Kamera der Vorrichtung im Vergleich zur ersten Kamera unter einem anderen Neigungswinkel bezüglich des Kopfes, der Person angeordnet ist. Somit liegen also zwei unterschiedliche Blickwinkel auf den Kopf der Person vor.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine Vorrichtung zur Erzeugung eines brillenlosen dreidimensionalen Modells eines Kopfes einer bebrillten Person anhand einer schematischen Seitenansicht;
- Fig. 2: eine zweite Vorrichtung zur Erzeugung eines brillenlosen dreidimensionalen Modells eines Kopfes einer bebrillten Person anhand einer schematischen Seitenansicht;
- Fig. 3: eine dritte Vorrichtung zur Erzeugung eines brillenlosen dreidimensionalen Modells eines Kopfes einer bebrillten Person anhand einer schematischen Seitenansicht; und
- Fig. 4: eine schematische Darstellung einer Vielzahl von Gesichtszügen der bebrillten Person im periokularen Bereich.

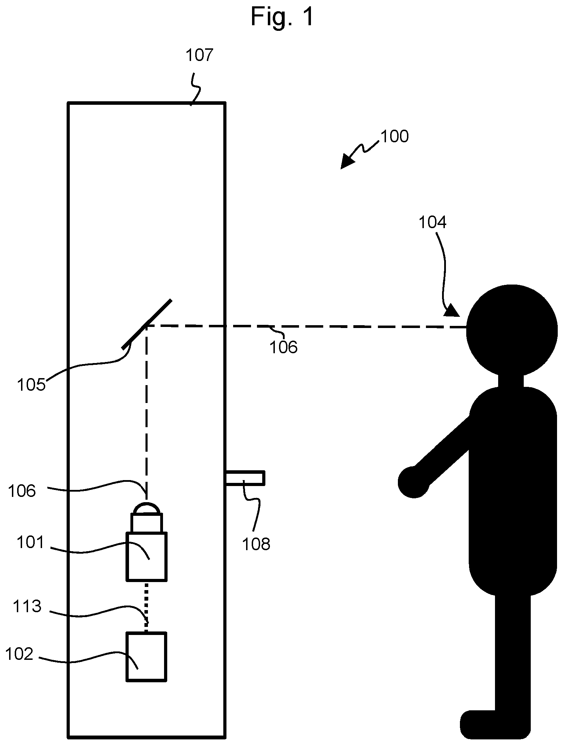

Figur 1 zeigt exemplarisch eine Vorrichtung 100 zur Erzeugung eines brillenlosen dreidimensionalen Modells eines Kopfes 104 einer bebrillten Person, mit einer Kamera 101 zur Erfassung eines Kopfes 104 der Person und mit einer mit der Kamera 101 über eine Kommunikationsverbindung 113 verbundenen Auswerteeinheit 102. Die Auswerteeinheit 102 ist ausgebildet, ein dreidimensionales Rohmodell mit Brille des Kopfes 104 der Person anhand mindestens eines mit der Kamera 101 erfassten ersten Bildes des Kopfes 104 der Person zu erzeugen. Die Kamera 101 ist eingerichtet ein erstes Bild aus einer ersten Richtung des Kopfes 104 der Person optisch zu erfassen, wodurch ein erster Datensatz erzeugt wird. Im Anschluss ist die Kamera 101 ausgebildet, wenigstens ein zweites Bild aus einer zweiten Richtung des Kopfes 104 optisch zu erfassen, wodurch ein zweiter Datensatz erzeugt wird. Um den Kopf 104 der Person aus einer zweiten Richtung optisch erfassen zu können, muss die Person den Kopf 104 in eine zweite Richtung neigen. Dies kann bevorzugt erfolgen, indem der Person Anweisungen erteilt werden, insbesondere ein optischer oder akustischer Reiz ausgeübt wird. Auf diese Weise können mehrere Bilder aus unterschiedlichen Richtungen des Kopfes 104 der Person optisch erfasst werden und so weitere Datensätze erzeugt werden.

Die Auswerteeinheit 102 ist weiterhin ausgebildet die Bilder oder die Datensätze zu einem dreidimensionalen Rohmodell mit (noch vorhandener) Brille zusammenzuführen. Die Auswerteeinheit 102 ist ferner ausgebildet, im Anschluss die einem Brillengestell zugeordneten Gestellpixel und die den Brillengläsern 114 zugeordneten Brillenglaspixel in dem dreidimensionalen Rohmodell zu identifizieren. Die Identifizierung erfolgt entweder anhand von bekannten Brillenmodellen oder anhand von Randerkennung, Kontrasterkennung oder Farberkennung. Weiterhin ist die Auswerteeinheit 102 ausgebildet, bei Vorhandensein von Gestellpixel, diese aus dem dreidimensionalen Rohmodell zu entfernen. Durch das Entfernen der Gestellpixel werden im Rohmodell und damit auch im brillenlosen dreidimensionalen Modell Fehlpixel, das heißt Bildfehlinformationen erzeugt. Um ein vollständiges brillenloses dreidimensionales Modell zu erzeugen, ist die Auswerteeinheit 102 eingerichtet, die so erzeugten Fehlpixel mittels Extrapolation auszugleichen. Alternativ ist die Auswerteeinheit 102 auch eingerichtet, die so erzeugten Fehlpixel auch anhand von Bildinformationen aus den weiteren durch die Kamera 101 erzeugten Bildern auszugleichen. Die Auswerteeinheit 102 ist ferner ausgebildet, das Fehlen eines Brillengestells im Rohmodell zu erkennen, beispielsweise wenn die Person ein gestellloses Brillenmodell trägt, so dass auf das Entfernen von Gestellpixel aus dem Rohmodell verzichtet werden kann.

Nachdem das Brillengestell optisch aus dem Rohmodell entfernt wurde, veranlasst die Auswerteeinheit 102, dass die durch die Brillengläser 114 hervorgerufenen optischen Effekte, also die Verzeichnungen aus dem Rohmodell entfernt werden. Dazu ist die Auswerteeinheit 102 eingerichtet, Pixel eines Verlaufs 115a, 115b, 115c, 115d wenigstens eines Gesichtszugs 115 der bebrillten Person abseits der Gestellpixel und der Brillenglaspixel, also abseits eines Brillenrands 116 und abseits eines Brillenglases 114, zu identifizieren und diejenigen Pixel im Verlauf 115a, 115b, 115c, 115d des Gesichtszugs 115, die einer durch das Brillenglas 114 hervorgerufenen Verzeichnung des Gesichtszugs 115 entsprechen, zu erfassen. Die Auswerteeinheit 102 kann dann wenigstens eine Regel aus dem Verlauf der verzeichneten Pixel ableiten und auf das dreidimensionale Rohmodell anwenden. Die Auswerteeinheit 102 ist ferner ausgebildet, alle Brillenglaspixel in dem dreidimensionalen Rohmodell entsprechend der ermittelten Regel zu versetzen, derart, dass ein brillenloses dreidimensionales Modell erzeugt wird.

In der der Person zugewandten Gehäusefront der Vorrichtung 100 sind Öffnungen ausgebildet, durch die der Strahlengang 106 zwischen der Kamera 101 und dem Gesicht 104 hindurchtreten kann. Die Kamera 101 ist im gezeigten Beispiel auf einen Spiegel 105 gerichtet, sodass er Strahlengang 106 der Kamera 101 gefaltet ist, um einen größeren Abstand zwischen der Kamera 101 und im Gesicht 104 herzustellen. Es ist außerdem zu erkennen, dass die Vorrichtung 100 mit einem Lesegerät 108 versehen ist, dass ausgebildet ist, ein mit einem Referenz-3D-Modell oder einem Referenzbild versehenes Identitätsdokument, insbesondere einen Reisepass einzulesen.

Weiterhin ist die Auswerteeinheit 102 ausgebildet, ein bebrilltes zweidimensionales Referenzbild aus dem brillenlosen dreidimensionalen Modell mittels Projektion und mittels Einfügen von Gestellpixel aus dem ersten Bild in das projizierte Zwischenbild oder aus einem weiteren Bild in das projizierte Zwischenbild zu erzeugen.

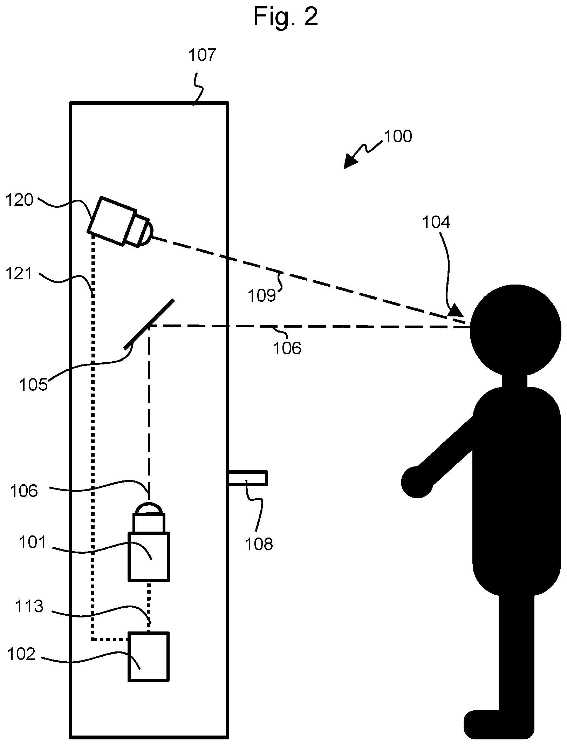

Figur 2 zeigt eine weitere Vorrichtung 100, die im Wesentlichen derjenigen aus Figur 1 entspricht. Die hier gezeigte Vorrichtung 100 ergänzt die Vorrichtung 100 aus Figur 1 um eine weitere Kamera 120, die ebenfalls in einer Kommunikationsverbindung 121 mit der Auswerteeinheit 102 steht. Mit dieser weiteren Kamera 120 lassen sich weitere Aufnahmen von dem Kopf der Person erfassen, wodurch sich das dreidimensionale Rohmodell erzeugen lässt, sowie fehlende Pixel aufgrund des Brillengestells für das endgültige brillenlose dreidimensionale Modell ergänzen lassen. Dies wird zusätzlich dadurch begünstigt, dass die weitere Kamera 120 unter einem gegenüber der Kamera 101 abweichenden Neigungs- bzw. Aufnahmewinkel bezüglich des Kopfes der bebrillten Person ausgerichtet ist.

Optional und daher nicht näher in den Figuren 1 bis 3 gezeigt, kann die Vorrichtung 100 auch ein Mittel zur Beleuchtung des Gesichts der Person umfassen, wodurch sich aufgrund der verstärkten Ausleuchtung der Szene zusätzliche Gesichtszüge 115, insbesondere in der periokularen Region, identifizieren lassen. Das Mittel zur Beleuchtung richtet die Beleuchtung unter einem von Null Grad verschiedenen Winkel auf den Kopf, insbesondere auf die periokulare Region, um die Person nicht (allzu sehr) zu blenden.

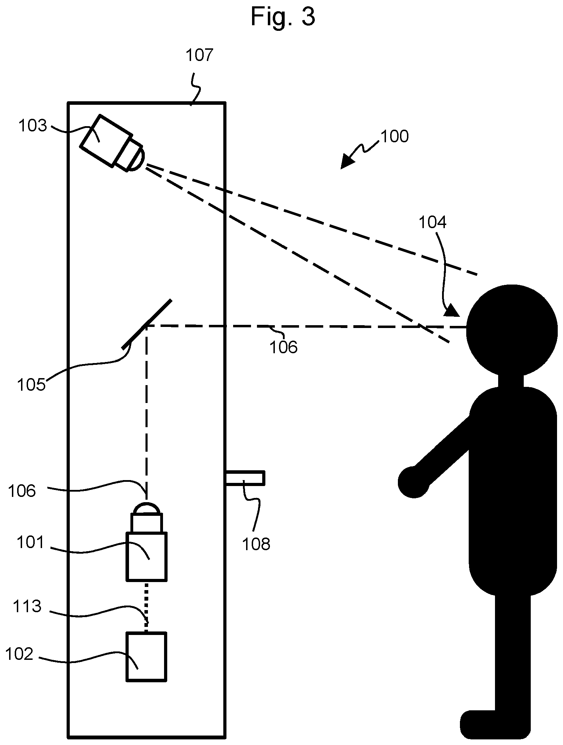

In Figur 3 ist eine weitere Vorrichtung 100 gezeigt, die auch im Wesentlichen derjenigen aus der Figur 1 entspricht. Das dreidimensionale Rohmodell mit Brille wird mittels der in Fig. 3 beschriebenen Vorrichtung 100 mittels strukturierter Beleuchtung erzeugt. Dazu weist die Vorrichtung 100 ein Projektionsmittel 103 auf, welches ein Muster, insbesondere ein Linienmuster oder ein Gittermuster oder ein Punktmuster auf den Kopf, insbesondere auf das Gesicht der Person projiziert. Die Kamera 101 nimmt wiederum ein Bild des beleuchteten Gesichts der Person auf und die Auswerteeinheit 102 ist ausgebildet, das dreidimensionale Rohmodell mit Brille anhand des erfassten Bildes mit dem darauf projizierten Muster zu berechnen.

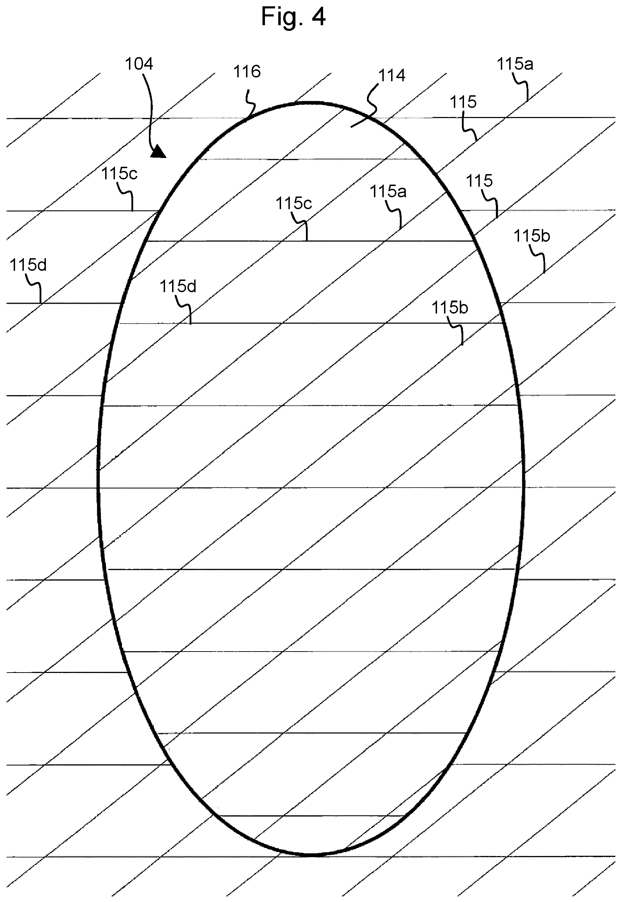

Wie in Figur 4 rein schematisch illustriert ist, ergibt sich eine Verzeichnung der Gesichtszüge 115 aufgrund der Brechung des Lichts am Rand 116 der Brillengläser 114. Dadurch entstehen am Rand 116 der Brillengläser 114 Unstetigkeitsstellen und/oder Knickstellen im Linienverlauf des jeweiligen Gesichtszugs 115 der bebrillten Person. Dies lässt sich nachvollziehen, wenn man den Verlauf 115a, 115b, 115c, 115d der diversen Gesichtszüge 115 folgt. Darüber hinaus wird sich der Verlauf 115a, 115b, 115c, 115d der Gesichtszüge 115 aufgrund der Krümmung der Linse der Brille kissenartig oder tonnenartig ausbreiten, sodass diese Verlaufsänderungen ebenfalls erfasst werden können. Anhand der so ermittelten Verzeichnung lässt sich wenigstens eine Regel für die einzelnen Brillenglaspixel im Bereich des Brillenglases 114 ermitteln.

Das Verfahren zur Erzeugung eines brillenlosen dreidimensionalen Modells eines Kopfes 104 einer bebrillten Person umfasst dabei die folgenden Schritte: Zunächst wird ein dreidimensionales Rohmodell des Kopfes104 der Person mit Brille anhand mindestens eines mit einer Kamera 101 erfassten ersten Bildes des Kopfes 104 der Person erzeugt. Dieses dreidimensionale Rohmodell mit Brille kann durch optisches Erfassen von mehreren Bildern aus unterschiedlichen Richtungen des Kopfes 104 mittels der ersten Kamera 102 oder mittels der weiteren Kamera 120 erfasst werden. Die so erzeugten Datensätze oder Bilder werden zu dem dreidimensionalen Rohmodell mit Brille zusammengeführt. Alternativ kann der Kopf 104 der Person mittels des Projektionsmittels 103 beleuchtet werden, sodass ein Muster auf den Kopf 104 insbesondere auf das Gesicht der Person projiziert wird. Anhand der Aufnahme des Bildes des beleuchteten Kopfes 104 oder Gesichts der Person mit der Kamera 101, wird das dreidimensionale Rohmodell mit Brille berechnet.

Im Anschluss daran wird festgestellt, ob die Brille ein Brillengestell aufweist oder ein brillengestellloses Brillenmodell vorliegt. Dies kann beispielsweise anhand von Farberkennung oder über einen Kontrastverlauf erfolgen. So werden, falls vorhanden, die einem Brillengestell zugeordneten Gestellpixel und die den Brillengläsern 114 zugeordneten Brillenglaspixel in dem Rohmodell identifiziert und bei Vorhandensein von Gestellpixel diese aus dem Rohmodell entfernt. Die durch das Entfernen der Gestellpixel im Rohmodell erzeugten Fehlpixel werden mittels Extrapolation der zu den Gestellpixel benachbarten Pixel ausgeglichen. Alternativ kann der Ausgleich der Fehlpixel auch anhand von Bildinformationen erfolgen, die durch die Kamera 101 oder die weitere Kamera 120 optisch erfassten Bilder des Kopfes 104 der Person aus unterschiedlichen Neigungswinkeln generiert wurden.

Im Anschluss entfernt die Auswerteeinheit 102, die durch die Brillengläser 114 hervorgerufenen optischen Effekte, insbesondere die Verzeichnungen durch Bildbearbeitung. Dazu werden zunächst Pixel eines Verlaufs 115a, 115b, 115c, 115d wenigstens eines Gesichtszugs 115 der bebrillten Person abseits der Gestellpixel und abseits der Brillenglaspixel , also abseits des Brillenrands 116 und abseits des Brillenglas 114 identifiziert und diejenigen Pixel im Verlauf 115a, 115b, 115c, 115d des Gesichtszugs 115 erfasst, die einer durch das Brillenglas 114 hervorgerufenen Verzeichnung des Gesichtszugs 115 entsprechen. Aus dem Verlauf 115a, 115b, 115c, 115d der verzeichneten Pixel wird eine Regel abgeleitet und auf das dreidimensionale Rohmodell angewendet, d. h. alle Brillenglaspixel werden derart anhand der ermittelten Regel versetzt, dass ein brillenloses dreidimensionales Modell erzeugt wird, bei dem die durch die Brillengläser 114 hervorgerufenen optischen Effekte ausgeglichen sind.

Für eine Identifizierung der bebrillten Person wird dann der Auswerteeinheit 102 ein Referenz-3D-Modell bereitgestellt, wonach das brillenlose dreidimensionale Modell des Kopfes der Person mit dem Referenz-3D-Modell verglichen wird. Das Referenz-3D-Modell kann dabei auf einem Identitätsdokument angebracht sein, wobei das mit dem Referenz-3D-Modell versehene Identitätsdokument mit dem Lesegerät 108 eingelesen wird, bevor es mit dem brillenlosen dreidimensionalen Modell verglichen wird.

Weiterhin wird aus dem brillenlosen dreidimensionalen Modell ein zweidimensionales bebrilltes Referenzmodell erzeugt und in einen Speicher hinterlegt. Dazu wird mittels Projektion des brillenlosen dreidimensionalen Modells ein zweidimensionales brillenloses Zwischenbild erzeugt. Nun wird entweder erneut der Kopf 104 der bebrillten Person durch die Kamera 101 oder durch die weitere Kamera 120 optisch erfasst und ein weiteres zweidimensionales Bild der bebrillten Person erzeugt oder eines der zuvor optisch erfassten zweidimensionalen Bilder des Kopfes 104 der Person bereitgestellt. Anhand des Bildes oder des Weiteren Bildes werden die dem Brillengestell zugeordneten Gestellpixel identifiziert und diese aus dem Bild oder aus dem weiteren Bild ausgeschnitten. Die ausgeschnittenen Gestellpixel werden in das zweidimensionale brillenlose Zwischenbild eingefügt und die durch die Projektion und durch das Einfügen der Gestellpixel hervorgerufenen Verzerrungen ausgeglichen. Dies erfolgt, indem Referenzpunkte in dem Bild oder in dem weiteren Bild lokalisiert werden, zusammen mit den entsprechenden Referenzpunkte in dem projizierten Zwischenbild. Durch Aufstellen einer Regel anhand der Verschiebung der Referenzpunkte in dem Bild oder in dem weiteren Bild bezüglich der Referenzpunkte in dem projizierten Zwischenbild, werden die Gestellpixel in dem Zwischenbild derart verschoben, dass ein zweidimensionales Referenzbild mit Brillengestell, bei dem die durch die Brillengläser 114 hervorgerufenen optischen Effekte ausgeglichen sind, erzeugt wird. In anderen Worten wird ein zweidimensionales Referenzbild mit einem Brillengestell, aber ohne die Brillengläser 114 und ohne die auf die Brillengläser 114 zurückzuführenden optischen Effekten, erzeugt.

### BEZUGSZEICHENLISTE

- 100: Vorrichtung
- 101: Kamera
- 102: Auswerteeinheit
- 103: Projektionsmittel
- 104: periokulare Region
- 105: Spiegel
- 106: Strahlengang (Kamera)
- 107: Gehäuse
- 108: Lesegerät
- 109: Strahlengang (weitere Kamera)
- 113: Kommunikationsverbindung (Kamera)
- 114: Brillenglas
- 115: Gesichtszüge der bebrillten Person
- 115a: Verlauf (Gesichtszug)
- 115b: Verlauf (Gesichtszug)
- 115c: Verlauf (Gesichtszug)
- 115d: Verlauf (Gesichtszug)
- 116: Brillenrand / Brillengestell
- 120: weitere Kamera
- 121: Kommunikationsverbindung (weitere Kamera)

## Patentansprüche

1. Verfahren zur Erzeugung eines brillenlosen dreidimensionalen Modells einer periokularen Region eines Kopfes (104) einer bebrillten Person:
- Erzeugung eines dreidimensionalen Rohmodells des Kopfes der Person mit Brille anhand mindestens eines mit einer Kamera (101) erfassten ersten Bildes des Kopfes (104) der Person, wobei die Kamera (101) ausschließlich die periokulare Region erfasst,
- Identifizieren der einem Brillengestell zugeordneten Gestellpixel und der den Brillengläsern (114) zugeordneten Brillenglaspixel in dem Rohmodell,
- Bei Vorhandensein von Gestellpixel, Entfernen dieser aus dem Rohmodell,
- Identifizieren von Pixel eines Verlaufs (115a, 115b, 115c, 115d) wenigstens eines Gesichtszugs (115) der bebrillten Person abseits der Gestellpixel und abseits der Brillenglaspixel,
- Erfassen derjenigen Pixel im Verlauf (115a, 115b, 115c, 115d) des Gesichtszugs (115), die einer durch das Brillenglas (114) hervorgerufenen Verzeichnung des Gesichtszugs (115) entsprechen,
- Ableiten oder Anwenden einer Regel aus dem Verlauf (115a, 115b, 115c, 115d) der verzeichneten Pixel und
- Versetzen aller Brillenglaspixel in dem Rohmodell entsprechend der ermittelten oder angewendeten Regel, derart, dass ein brillenloses dreidimensionales Modell der periokularen Region erzeugt wird, bei dem die durch die Brillengläser (114) hervorgerufenen optischen Effekte ausgeglichen sind.

2. Verfahren nach Anspruch 1, **dadurch gekennzeichnet, dass** die durch das Entfernen der Gestellpixel im Rohmodell erzeugten Fehlpixel mittels Interpolation der zu den Gestellpixel benachbarten Pixel ausgeglichen wird.

3. Verfahren nach Anspruch 1 oder 2, **dadurch gekennzeichnet, dass** das Rohmodell erzeugt wird durch die folgenden Schritte:
A) Optisches Erfassen eines ersten Bildes aus einer ersten Richtung des Kopfes (104) der Person mittels der Kamera (101), wodurch ein erster Datensatz erzeugt wird,
B) Optisches Erfassen wenigstens eines zweiten Bildes aus einer zweiten Richtung des Kopfes durch die Kamera (101) oder durch eine weitere Kamera (120), wodurch ein zweiter Datensatz erzeugt wird und
C) Zusammenführen der Bilder oder der Datensätze zu einem dreidimensionalen Rohmodell mit Brille.

4. Verfahren nach Anspruch 1 oder 2, **dadurch gekennzeichnet, dass** das Rohmodell erzeugt wird mittels der folgenden Schritte:
A) Beleuchten eines Kopfes (104) der Person und dadurch Erzeugen eines Musters auf dem Kopf (104) der Person mittels eines Projektionsmittels (103),
B) Aufnahme eines Bildes des beleuchteten Kopfes (104) der Person mit der Kamera (101) und
C) Berechnen des Rohmodells mit Brille anhand des Bildes.

5. Verfahren nach einem der Ansprüche 1 bis 4, **dadurch gekennzeichnet, dass** der Auswerteeinheit (102) ein Referenz-3D Modell bereitgestellt wird, und dass das brillenlose dreidimensionale Modell mit dem Referenz-3D-Modell verglichen wird, und dass bei Übereinstimmung des brillenlosen dreidimensionalen Modells mit dem Referenz-3D-Modell der Zutritt bei einer Zugangskontrolle gewährt wird.

6. Verfahren nach einem der Ansprüche 1 bis 5, **dadurch gekennzeichnet, dass** ein zweidimensionales bebrilltes Referenzbild aus dem brillenlosen dreidimensionalen Modell erzeugt und in einem Speicher hinterlegt wird.

7. Verfahren nach Anspruch 6, **dadurch gekennzeichnet, dass** das zweidimensionale bebrillte Referenzbild mittels der folgenden Schritte erzeugt wird:
- Erzeugung eines zweidimensionalen brillenlosen Zwischenbildes mittels Projektion des brillenlosen dreidimensionalen Modells,
- Erneutes optisches Erfassen des Kopfes (104) der bebrillten Person, wodurch ein weiterer Datensatz und ein weiteres zweidimensionales Bild der bebrillten Person erzeugt wird, oder Bereitstellen eines der zuvor optisch erfassten zweidimensionalen Bilder des Kopfes (104) der Person,
- Zuordnen der Gestellpixel in dem Bild oder in dem weiteren Bild und Ausschneiden der Gestellpixel aus dem Bild oder aus dem weiteren Bild und
- Einfügen der Gestellpixel in das Zwischenbild und Ausgleichen der durch die Projektion und durch das Einfügen der Gestellpixel hervorgerufenen Verzerrung, wodurch ein bebrilltes zweidimensionales Referenzbild des Kopfes (104) der Person erzeugt wird, bei dem die durch die Brillengläser (114) hervorgerufenen optischen Effekte ausgeglichen sind.

8. Verfahren nach Anspruch 7, **dadurch gekennzeichnet, dass** die Verzerrung mittels der zusätzlichen Schritte ausgeglichen wird:
A) Lokalisation von Referenzpunkten in dem Bild oder in dem weiteren Bild, sowie Lokalisation der den Referenzpunkten entsprechenden Referenzpunkten in dem projizierten Zwischenbild,
B) Aufstellen einer Regel anhand der Verschiebung der Referenzpunkte in dem Bild oder in dem weiteren Bild bezüglich der Referenzpunkte in dem projizierten Zwischenbild, und
C) Verschieben der Gestellpixel in dem Zwischenbild anhand der weiteren Regel.

9. Vorrichtung (100) zur Erzeugung eines brillenlosen dreidimensionalen Modells einer bebrillten Person mit einer Kamera (101) zur Erfassung eines Kopfes (104) der Person, wobei die Kamera (101) ausschließlich die periokulare Region erfasst, sowie mit einer mit der Kamera (101) verbundenen Auswerteeinheit (102), die mittels des von der Kamera (101) gelieferten Bilds ausgebildet ist,
- ein Rohmodell mit Brille einer Person anhand mindestens eines mit einer Kamera (101) erfassten ersten Bildes des Kopfes (104) der Person zu erzeugen,
- die einem Brillengestell zugeordneten Gestellpixel und der den Brillengläsern (114) zugeordneten Brillenglaspixel in dem Rohmodell zu identifizieren,
- bei Vorhandensein von Gestellpixel, diese aus dem Rohmodell zu entfernen,
- Pixel eines Verlaufs (115a, 115b, 115c, 115d) wenigstens eines Gesichtszugs (115) der bebrillten Person abseits der Gestellpixel und der Brillenglaspixel zu identifizieren,
- diejenigen Pixel im Verlauf (115a, 115b, 115c, 115d) des Gesichtszugs (115), die einer durch das Brillenglas (114) hervorgerufenen Verzeichnung des Gesichtszugs (115) entsprechen zu erfassen,
- eine Regel aus dem Verlauf der verzeichneten Pixel abzuleiten oder anzuwenden, und
- alle Brillenglaspixel in dem dreidimensionalen Rohmodell entsprechend der ermittelten oder angewendeten Regel zu versetzen, wodurch die durch die Brillengläser (114) hervorgerufenen optischen Effekte ausgeglichen und ein brillenloses dreidimensionales Modell der periokularen Region erzeugt wird.

10. Vorrichtung (100) nach Anspruch 9, **dadurch gekennzeichnet, dass** die Auswerteeinheit (102) ausgebildet ist, ein bebrilltes zweidimensionales Referenzbild aus dem brillenlosen dreidimensionalen Modell mittels Projektion und mittels Einfügen von Gestellpixel aus dem ersten Bild oder aus einem weiteren Bild in das projizierte Zwischenbild zu erzeugen.

## Claims

1. A method for generating a glasses-free three-dimensional model of a periocular region of a head (104) of a person wearing glasses:
- generating a three-dimensional raw model of the person's head while wearing glasses based on at least one first image of the person's head (104) captured by a camera (101), wherein the camera (101) captures exclusively the periocular region,
- identifying the frame pixels associated with a pair of eyeglass frames and the lens pixels associated with the eyeglass lenses (114) in the raw model,
- if frame pixels are present, removing them from the raw model,
- identifying pixels of a gradient (115a, 115b, 115c, 115d) of at least one facial feature (115) of the person wearing glasses, away from the frame pixels and away from the lens pixels,
- detecting those pixels in a contour (115a, 115b, 115c, 115d) of the facial feature (115) that correspond to a distortion of the facial feature (115) caused by the eyeglass lens (114),
- deriving or applying a rule from the sequence (115a, 115b, 115c, 115d) of the distorted pixels, and
- offset all lens pixels in the raw model according to the determined or applied rule, such that a glasses-free three-dimensional model of the periocular region is generated in which the optical effects caused by the lenses (114) are compensated for.

2. The method according to claim 1, **characterized in that** the missing pixels generated by the removal of the frame pixels in the raw model are compensated for by interpolating the pixels adjacent to the frame pixels.

3. The method according to claim 1 or 2, **characterized in that** the raw model is generated by the following steps:
A) optically capturing a first image from a first direction of the person's head (104) using the camera (101), thereby generating a first data set,
B) optically capturing at least a second image of the head from a second direction using the camera (101) or another camera (120), thereby generating a second data set, and
C) combining the images or data sets into a three-dimensional raw model including glasses.

4. The method according to claim 1 or 2, **characterized in that** the raw model is generated by means of the following steps:
A) illuminating a person's head (104) and thereby generating a pattern on the person's head (104) using a projection means (103),
B) capturing an image of the illuminated head (104) of the person with the camera (101); and
C) calculating the raw model including glasses based on the image.

5. The method according to any one of claims 1 to 4, **characterized in that** a reference 3D model is provided to the evaluation unit (102), and **in that** the glasses-free three-dimensional model is compared with the reference 3D model, and **in that**, if the glasses-free three-dimensional model matches the reference 3D model, access is granted during an access control check.

6. The method according to any one of claims 1 to 5, **characterized in that** a two-dimensional reference image with glasses is generated from the glasses-free three-dimensional model and stored in a memory.

7. The method according to claim 6, **characterized in that** the two-dimensional glasses-wearing reference image is generated by means of the following steps:
- generating a two-dimensional glasses-free intermediate image by projecting the glasses-free three-dimensional model,
- optically capturing the head (104) of the person wearing glasses again, thereby generating a further data set and a further two-dimensional image of the person wearing glasses, or providing one of the previously optically captured two-dimensional images of the person's head (104),
- mapping the frame pixels in the image or in the additional image and cropping the frame pixels from the image or from the additional image, and
- inserting the frame pixels into the intermediate image and compensating for the distortion caused by the projection and by the insertion of the frame pixels, thereby generating a two-dimensional reference image of the person's head (104) wearing glasses, in which the optical effects caused by the eyeglass lenses (114) are compensated for.

8. The method according to claim 7, **characterized in that** the distortion is compensated for by means of the additional steps of:
A) locating reference points in the image or in the further image, as well as locating the reference points corresponding to the reference points in the projected intermediate image,
B) establishing a rule based on the displacement of the reference points in the image or in the further image relative to the reference points in the projected intermediate image, and
C) shifting the frame pixels in the intermediate image based on the further rule.

9. A device (100) for generating a glasses-free three-dimensional model of a person wearing glasses, comprising a camera (101) for capturing the person's head (104), wherein the camera (101) captures only the periocular region, and an evaluation unit (102) connected to the camera (101), which - using the image provided by the camera (101) - is configured,
- to generate a raw model of a person wearing glasses based on at least one first image of the person's head (104) captured by a camera (101),
- to identify the frame pixels associated with a spectacle frame and the lens pixels associated with the spectacle lenses (114) in the raw model,
- if frame pixels are present, to remove them from the raw model,
- to identify pixels of a gradient (115a, 115b, 115c, 115d) of at least one facial feature (115) of the person wearing glasses, apart from the frame pixels and the lens pixels,
- to detect those pixels in the gradient (115a, 115b, 115c, 115d) of the facial feature (115) that correspond to a distortion of the facial feature (115) caused by the lens (114),
- to derive or apply a rule from the sequence of distorted pixels, and
- to offset all eyeglass lens pixels in the three-dimensional raw model in accordance with the determined or applied rule, thereby compensating for the optical effects caused by the eyeglass lenses (114) and generating a glasses-free three-dimensional model of the periocular region.

10. The device (100) according to claim 9, **characterized in that** the evaluation unit (102) is configured to generate a two-dimensional reference image with glasses from the glasses-free three-dimensional model by means of projection and by inserting frame pixels from the first image or from a further image into the projected intermediate image.

## Revendications

1. Procédé de génération d'un modèle en trois dimensions sans lunettes d'une région périoculaire d'une tête (104) d'une personne portant des lunettes :
- la génération d'un modèle brut en trois dimensions de la tête de la personne avec des lunettes à l'aide d'au moins une première image de la tête de la personne détectée à l'aide d'une caméra (101), dans lequel la caméra (101) détecte exclusivement la région périoculaire,
- l'identification des pixels de monture associés à une monture de lunettes et des pixels de verre de lunettes associés aux verres de lunettes (114) dans le modèle brut,
- en présence de pixels de monture, le retrait de ceux-ci du modèle brut,
- l'identification de pixels d'une étendue (115a, 115b, 115c, 115d) au moins d'un trait de visage (115) de la personne portant des lunettes à l'écart des pixels de monture et à l'écart des pixels de verre de lunettes,
- la détection des pixels dans l'étendue (115a, 115b, 115c, 115d) du trait de visage (115) qui correspondent à une distorsion du trait de visage (115) suscitée par le verre de lunettes (114),
- la déduction ou l'application d'une règle à partir de l'étendue (115a, 115b, 115c, 115d) des pixels distordus et
- le déplacement de tous les pixels de verre de lunettes dans le modèle brut selon les règles déterminées ou appliquées, de telle manière qu'un modèle en trois dimensions sans lunettes de la région périoculaire soit généré, pour lequel les effets optiques suscités par les verres de lunettes (114) sont compensés.

2. Procédé selon la revendication 1, **caractérisé en ce que** les pixels manquants générés par le retrait des pixels de monture dans le modèle brut sont compensés par interpolation des pixels contigus aux pixels de monture.

3. Procédé selon la revendication 1 ou 2, **caractérisé en ce que** le modèle brut est généré par les étapes suivantes :
A) la détection optique d'une première image à partir d'une première direction de la tête (104) de la personne au moyen de la caméra (101), selon laquelle un premier jeu de données est généré,
B) la détection optique au moins d'une seconde image à partir d'une seconde direction de la tête par la caméra (101) ou par une autre caméra (120), selon laquelle un second jeu de données est généré et
C) le regroupement des images ou des jeux de données pour former un modèle brut en trois dimensions avec des lunettes.

4. Procédé selon la revendication 1 ou 2, **caractérisé en ce que** le modèle brut est généré au moyen des étapes suivantes :
A) l'éclairage d'une tête (104) de la personne et ainsi la génération d'un modèle sur la tête (104) de la personne à l'aide d'un moyen de projection (103),
B) l'enregistrement d'une image de la tête éclairée (104) de la personne avec la caméra (101) et
C) le calcul du modèle brut avec des lunettes à l'aide de l'image.

5. Procédé selon l'une quelconque des revendications 1 à 4, **caractérisé en ce qu'**un modèle 3D de référence est fourni à l'unité d'évaluation (102), et **en ce que** le modèle en trois dimensions sans lunettes est comparé avec le modèle 3D de référence, et **en ce que** l'accès est garanti en cas de contrôle d'accès si le modèle en trois dimensions sans lunettes concorde avec le modèle 3D de référence.

6. Procédé selon l'une quelconque des revendications 1 à 5, **caractérisé en ce qu'**une image de référence à lunettes en deux dimensions est générée à partir du modèle en trois dimensions sans lunettes et est enregistrée dans une mémoire.

7. Procédé selon la revendication 6, **caractérisé en ce que** l'image de référence à lunettes en deux dimensions est générée à l'aide des étapes suivantes :
- la génération d'une image intermédiaire sans lunettes en deux dimensions par projection du modèle en trois dimensions sans lunettes,
- la détection optique renouvelée de la tête (104) de la personne portant des lunettes, selon laquelle un autre jeu de données et une autre image en deux dimensions de la personne portant des lunettes est généré, ou la fourniture d'une des images en deux dimensions de la tête (104) de la personne détectées optiquement au préalable,
- l'association des pixels de monture dans l'image ou dans l'autre image et la découpe des pixels de monture de l'image ou de l'autre image et
- l'insertion des pixels de monture dans l'image intermédiaire et la compensation de la déformation suscitée par la projection et par l'insertion des pixels de monture, selon laquelle une image de référence en deux dimensions à lunettes de la tête (104) de la personne est générée, pour laquelle les effets optiques suscités par les verres de lunette (114) sont compensés.

8. Procédé selon la revendication 7, **caractérisé en ce que** la déformation est compensée au moyen des étapes supplémentaires :
A) la localisation de points de référence dans l'image ou dans l'autre image, ainsi que la localisation des points de référence correspondant aux points de référence dans l'image intermédiaire projetée,
B) l'élaboration d'une règle à l'aide du déplacement des points de référence dans l'image ou dans l'autre image par rapport aux points de référence dans l'image intermédiaire projetée et
C) le déplacement des pixels de monture dans l'image intermédiaire à l'aide de l'autre règle.

9. Dispositif (100) de génération d'un modèle en trois dimensions sans lunettes d'une personne portant des lunettes à l'aide d'une caméra (101) pour la détection d'une tête (104) de la personne, dans lequel la caméra (101) détecte exclusivement la région périoculaire, ainsi qu'à l'aide d'une unité d'évaluation (102) reliée à la caméra (101) qui est formée au moyen de l'image fournie par la caméra (101) afin de
- générer un modèle brut avec des lunettes d'une personne à l'aide d'au moins une première image de la tête (104) de la personne détectée à l'aide d'une caméra (101),
- identifier les pixels de monture associés à une monture de lunettes et les pixels de verre de lunettes associés aux verres de lunettes (114) dans le modèle brut,
- en présence de pixels de monture, les retirer du modèle brut,
- identifier les pixels d'une étendue (115a, 115b, 115c, 115d) au moins d'un trait de visage (115) de la personne portant des lunettes à l'écart des pixels de monture et des pixels de verre de lunettes,
- détecter les pixels dans l'étendue (115a, 115b, 115c, 115d) du trait de visage (115) qui correspondent à une distorsion du trait de visage (115) suscitée par le verre de lunettes (114),
- déduire ou appliquer une règle à partir de l'étendue de pixels distordus et
- déplacer tous les pixels de verre de lunettes dans le modèle brut en trois dimensions selon les règles déterminées ou appliquées, moyennant quoi les effets optiques suscités par les verres de lunettes (114) sont compensés et un modèle en trois dimensions sans lunettes de la région périoculaire est généré.

10. Dispositif (100) selon la revendication 9, **caractérisé en ce que** l'unité d'évaluation (102) est conçue afin de générer une image de référence en deux dimensions à lunettes à partir du modèle en trois dimensions sans lunettes par projection et par insertion de pixels de monture issus de la première image ou d'une autre image dans l'image intermédiaire projetée.
